(19) Europäisches Patentamt
European Patent Office
Office européen des brevets

(11) **EP 4 104 931 B1**

(12) **EUROPÄISCHE PATENTSCHRIFT**

(45) Veröffentlichungstag und Bekanntmachung des Hinweises auf die Patenterteilung:
**27.12.2023 Patentblatt 2023/52**

(21) Anmeldenummer: **21180206.1**

(22) Anmeldetag: **18.06.2021**

(51) Internationale Patentklassifikation (IPC):
**B01L 3/02** (2006.01)   **G01N 35/10** (2006.01)
**G01N 35/00** (2006.01)

(52) Gemeinsame Patentklassifikation (CPC):
**B01L 3/021; G01N 35/1016;** B01L 2200/146;
G01N 2035/1018

(54) **VERFAHREN ZUR DETEKTION EINES FEHLERZUSTANDES BEIM ASPIRIEREN EINER FLÜSSIGKEIT**

METHOD FOR DETECTING AN ERROR CONDITION IN THE ASPIRATION OF A LIQUID

PROCÉDÉ DE DÉTECTION D'UN ÉTAT D'ERREUR LORS DE L'ASPIRATION D'UN LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2022 Patentblatt 2022/51**

(73) Patentinhaber: **Euroimmun Medizinische Labordiagnostika AG**
**23560 Lübeck (DE)**

(72) Erfinder:
• FARELL, Danny
**23923 Gross Siemz (DE)**
• LAARMANN, Anna katharina
**23909 Ratzeburg (DE)**

(56) Entgegenhaltungen:
US-A- 4 893 515     US-A1- 2009 075 386
US-A1- 2014 137 980

**Beschreibung**

Zur Untersuchung menschlicher oder tierischer Proben in flüssiger Form sind Automaten bekannt, mit denen automatisiert solche Testproben unter Einsatz von Aspirationsnadeln einer biochemischen Untersuchung zugeführt werden. Derartige Probenflüssigkeiten sind also insbesondere Flüssigkeiten von menschlichen oder tierischen Proben in flüssiger Form, wie beispielsweise Blut, Urin oder Liquor. Für eine derartige biochemische Untersuchung ist es häufig notwendig, bestimmte, vorgegebene Volumina solcher Proben aus einer Flüssigkeitsvorrichtung beziehungsweise einem Flüssigkeitsbehälter heraus zu aspirieren in eine Aspirationsnadel hinein, um dann mittels der Aspirationsnadel das vorgegebene bzw. vorbestimmte Volumen der Probenflüssigkeit beispielsweise in einen anderen Behälter zu überführen.

Derartige flüssige Proben menschlichen oder tierischen Ursprungs sind nicht unbegrenzt bereitstellbar, sondern im Laborbetrieb häufig nur in einer gewissen Menge beziehungsweise einem gewissen Volumen vorhanden. Auch daher ist es im Zuge der biochemischen Untersuchung wichtig, sorgsam mit der bereitgestellten Probenmenge umzugehen.

Ein häufig auftretendes Problem besteht darin, dass derartige Probenflüssigkeiten mitunter Partikel oder aber feste Bestandteile aufweisen, welche zu einer Verstopfung der Aspirationsnadel führen können. Üblicherweise wird das Aspirieren des erwünschten Probenvolumens mittels Herstellens eines Unterdrucks in der Aspirationsnadel für einen vorbestimmten Zeitraum herbeigeführt, so dass durch Auswahl bzw. Vorgabe des vorbestimmten Zeitraums darauf abgestellt werden kann, dass ein bestimmtes, erwünschtes Volumen der Probenflüssigkeit in die Nadel aspiriert wird. Ist während dieses Zeitraums der Aspiration beziehungsweise des Zeitraums der Beaufschlagung der Aspirationsnadel mit dem Unterdruck es der Fall, dass die Nadel teilweise oder ganz aufgrund eines festen Probenbestandteils verstopft ist, so kann eine Aspiration eines erwünschten bzw. vorgegebenen Probenvolumens nicht mehr garantiert werden.

Aufgabe der vorliegenden Erfindung ist es daher, Verstopfungszustände bzw. einen Fehlerzustand der Aspirationsnadel, insbesondere des inneren Volumens der Aspirationsnadel, zu detektieren. Hierdurch kann festgestellt bzw. darauf geschlossen werden, ob tatsächlich ein erwünschtes beziehungsweise vorgegebenes Probenvolumen in die Aspirationsnadel aspiriert wurde.

Das Dokument US 2014/137980 offenbart ein Verfahren zur Detektion eines Fehlerzustandes beim Aspirieren einer Flüssigkeit, wobei eine Sensorsignalkurve erfasst wird und wobei in Abhängigkeit des Sensorsignals und eines Schwellenwertes ein Fehlerzustand detektiert wird.

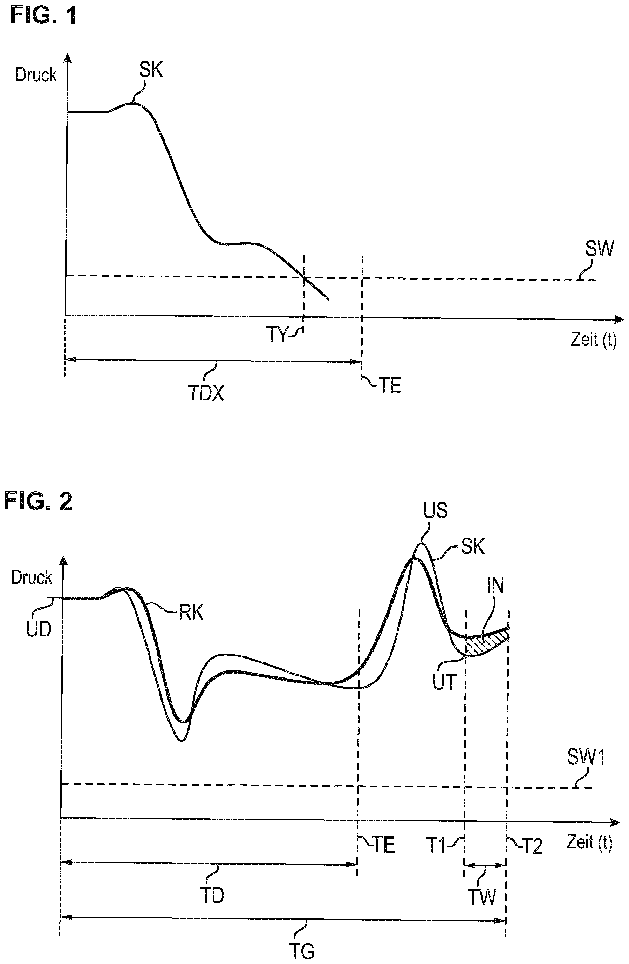

Aus dem Stand der Technik ist ferner ein Verfahren bekannt, welches anhand der Figur 1 illustriert wird.

Die Zeit ist auf der x-Achse aufgetragen und der Druck bzw. ein Drucksignal eines Sensors, welches den Druck in der Aspirationsnadel indiziert, auf der y-Achse. Für eine vorbestimmte Zeitdauer TDX wird bis zu einem Zeitpunkt TE mittels einer Pumpvorrichtung ein Unterdruck in dem Leitungssystem, welches die Aspirationsnadel umfasst, erzeugt. Der Druck innerhalb der Aspirationsnadel beziehungsweise des Leitungssystems wird anhand eines Drucksensors aufgenommen und das entsprechende Signal als Sensorsignalkurve SK beobachtet beziehungsweise erfasst. Fällt während des vorbestimmten Zeitraums TDX der Wert der Sensorsignalkurve SK beziehungsweise des Sensorsignals unter einen vorbestimmten Schwellenwert SW, so wird darauf geschlossen, dass eine Verstopfung der Aspirationsnadel bei fortwährender Erzeugung eines Unterdrucks in der Aspirationsnadel einen zu tiefen Druck herbeiführt, so dass dann zu einem Zeitpunkt TY aufgrund einer Unterschreitung des Schwellenwertes SW darauf geschlossen wird, dass eine Verstopfung der Aspirationsnadel vorliegt.

Die Erfindung schlägt eine hierzu alternative, verbesserte Lösung vor.

Vorgeschlagen wird ein Verfahren zur Detektion eines Fehlerzustandes beim Aspirieren einer Flüssigkeit, aufweisend die Schritte: Eintauchen einer Spitze einer Aspirationsnadel in die Flüssigkeit, Erzeugen eines Unterdrucks in der Aspirationsnadel für eine vorgegebene Zeitdauer zum Aspirieren eines vorbestimmten Teilvolumens der Flüssigkeit in die Aspirationsnadel, fortlaufendes Erfassen einer Sensorsignalkurve mittels fortlaufenden Messens eines Sensorsignals, welches einen Druck in der Aspirationsnadel indiziert, während einer gesamten Zeitdauer, welche die vorbestimmte Zeitdauer sowie ferner eine auf die vorbestimmte Zeitdauer folgende weitere Zeitdauer umfasst, Vorgeben einer Referenzsignalkurve.

Das Verfahren ist gekennzeichnet durch:

- Bestimmen eines Abweichungsmaßes, welches ein Abweichen der Sensorsignalkurve von der Referenzsignalkurve für die weitere Zeitdauer indiziert,

- Vorgeben eines vorbestimmten zweiten Schwellenwertes,

- Detektieren des Fehlerzustandes in dem Fall, dass das Sensorsignal einen ersten Schwellenwert während der vorbestimmten Zeitdauer unterschreitet,
oder Detektieren des Fehlerzustandes nach Ablauf der weiteren Zeitdauer in dem Fall, dass das Abweichungsmaß hinreichend von dem zweiten Schwellwert abweicht.

Vorzugsweise erfolgt das Detektieren des Fehlerzustandes in Abhängigkeit des Abweichungsmaßes und des zweiten Schwellwertes nach Ablauf der vorbestimmten Zeitdauer.

Vorzugsweise erfolgt ein Ausgeben eines Fehlersignals in dem Fall, dass der Fehlerzustand detektiert wurde.

Vorzugsweise erfolgt ein zeitliches Ausrichten der Sensorsignalkurve und der Referenzsignalkurve zueinander.

Vorzugsweise weist das Verfahren ferner die Schritte auf: Vorgeben eines Ziel-Aspirationsvolumens, Bereitstellen einer Basis-Referenzkurve sowie Generieren der Referenzsignalkurve mittels Modifizieren der Basis-Referenzkurve.

Vorzugsweise weist das Verfahren ferner die Schritte auf: Vorgeben eines zu erreichenden Ziel-Aspirationsvolumens, Bereitstellen mehrerer Basis-Referenzkurven, Auswählen einer der Basis-Referenzkurven in Abhängigkeit des Ziel-Aspirationsvolumens sowie Generieren der Referenzsignalkurve mittels Modifizieren der ausgewählten Basis-Referenzkurve.

Vorzugsweise erfolgt vorzugsweise ein Filtern des Sensorsignals mittels insbesondere eines Mittelwertfilters.

Insbesondere erzeugt die Druckerzeugungseinheit während der weiteren Zeitdauer keinen Unterdruck. Insbesondere endet ein Erzeugen eines Unterdrucks durch die Druckerzeugungseinheit am Ende der vorbestimmten Zeitdauer.

Vorgeschlagen wird ferner eine Vorrichtung zur Detektion eines Fehlerzustandes beim Aspirieren einer Flüssigkeit, aufweisend: eine Aspirationsnadel mit einer Spitze, eine ansteuerbare Verfahrvorrichtung zum Verfahren der Aspirationsnadel, insbesondere um die Spitze der Nadel in eine Flüssigkeit einzutauchen, eine Druckerzeugungseinheit zum Erzeugen eines Unterdrucks in der Aspirationsnadel, eine Drucksensoreinheit zum Messen eines Sensorsignals, welches einen Druck in der Aspirationsnadel indiziert, sowie eine Ansteuer- und Auswerteeinheit mit einer ersten Schnittstelle zu der Druckerzeugungseinheit, ferner einer zweiten Schnittstelle zu der Drucksensoreinheit und einer dritten Schnittstelle zu der Verfahrvorrichtung.

Die Ansteuer- und Auswerteeinheit ist ferner ausgebildet

- die Verfahrvorrichtung derart anzusteuern, dass die Spitze der Aspirationsnadel in die Flüssigkeit eintaucht,

- fortlaufend eine Sensorsignalkurve zu erfassen mittels fortlaufenden Messens des Sensorsignals während einer gesamten Zeitdauer, welche die vorbestimmte Zeitdauer sowie ferner eine auf die vorbestimmte Zeitdauer folgende weitere Zeitdauer umfasst,

- sowie eine vorbestimmte Referenzsignalkurve vorzugeben.

Die Ansteuer- und Auswerteeinheit ist dadurch gekennzeichnet ist, dass sie ferner ausgebildet ist,

- ein Abweichungsmaß zu bestimmen, welches ein Abweichen der Sensorsignalkurve von der Referenzsignalkurve während der weiteren Zeitdauer indiziert,

- einen vorbestimmten zweiten Schwellenwert vorzugeben,

- sowie den Fehlerzustand in dem Fall zu detektieren, dass das Sensorsignal einen ersten Schwellenwert während der vorgegebenen Zeitdauer unterschreitet,

- oder den Fehlerzustand nach Ablauf der weiteren Zeitdauer in dem Fall zu detektieren, dass das Abweichungsmaß hinreichend von dem zweiten Schwellwert abweicht.

Im Folgenden wird die Erfindung anhand spezieller Ausführungsformen ohne Beschränkung des allgemeinen Erfindungsgedankens anhand der Figuren näher erläutert. Dabei zeigen:

Figur 1 eine erste beispielhafte Sensorsignalkurve,

Figur 2 eine weitere Sensorsignalkurve sowie eine Referenzsignalkurve,

Figur 3 eine Sensorsignalkurve bei Aspiration eines Volumens von 230 µl

Figuren 4 und 5 Sensorsignalkurven bei Aspiration eines Volumens von 5 µl

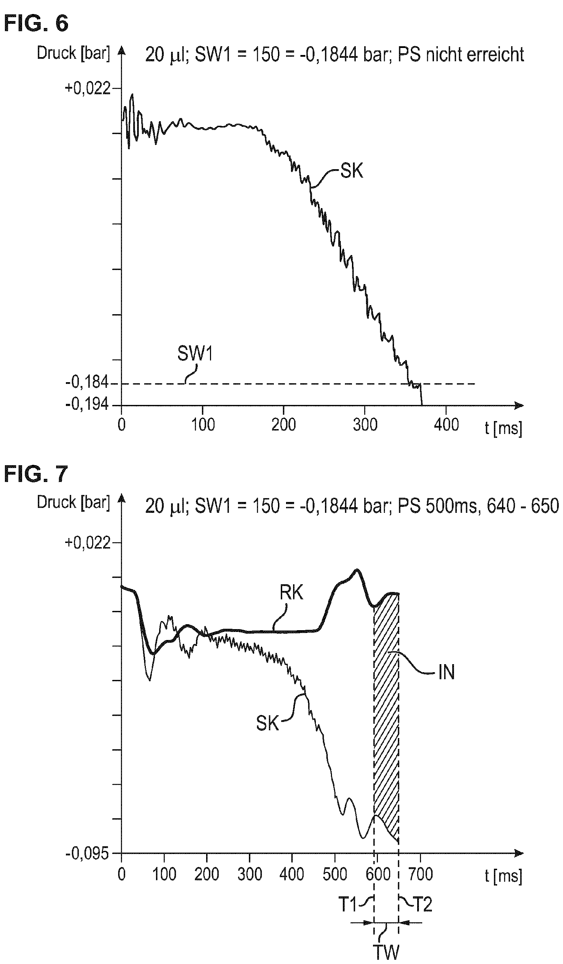

Figuren 6 und 7 Sensorsignalkurven im Fall einer Aspiration von 20 µl,

Figur 8 eine Basisreferenzkurve sowie mehrere generierte Referenzkurven,

Figur 9 generierte sowie experimentell ermittelte Referenzkurven für unterschiedliche Volumina,

Figur 10 eine beispielhafte Ausführungsform einer erfindungsgemäßen Vorrichtung,

Figur 11 Schritte des erfindungsgemäßen Verfahrens gemäß einer bevorzugten Ausführungsform,

Figuren 12 bis 15 vorzugsweise durchzuführende Schritte des vorgeschlagenen Verfahrens.

Verschiedene Ausführungsbeispiele werden nun ausführlicher unter Bezugnahme auf die beiliegenden Zeichnungen beschrieben, in denen einige Ausführungsbeispiele dargestellt sind.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Optionale Komponenten sind in den Figuren mit gestrichelten Linien oder Pfeilen dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

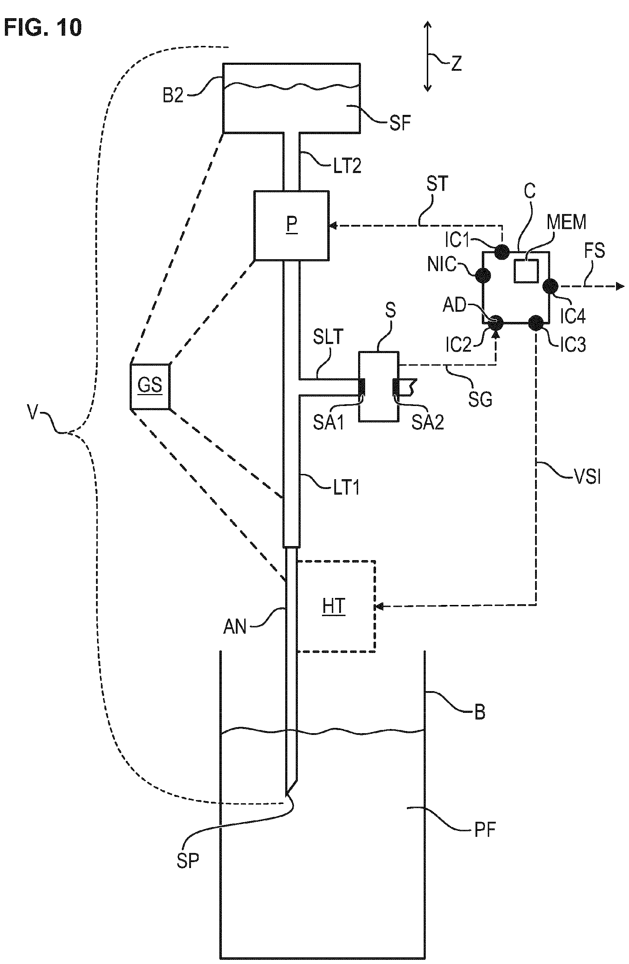

Die Erfindung wird nun anhand eines Ausführungsbeispiels und anhand der Figur 2 und der Figur 10 im Weiteren erläutert.

Figur 10 illustriert ein Ausführungsbeispiel einer erfindungsgemäßen Vorrichtung V, welche eine Aspirationsnadel AN mit einer Spitze SP umfasst, welche in eine Flüssigkeit beziehungsweise Probenflüssigkeit PF getaucht werden kann, welche vorzugsweise in einem Behälter B vorgehalten wird. Die Aspirationsnadel AN ist über ein Leitungssystem LT1 mit einer Druckerzeugungseinheit in Form einer Pumpe P verbunden. Das Leitungssystem LT1 ist vorzugsweise ein flexibler Schlauch. Ferner ist eine Drucksensoreinheit S vorhanden. Die Sensoreinheit S ist über eine Stichleitung SLT mit der Leitung LT1 verbunden und weist eine Sensorseite beziehungsweise einen Sensoranschluss SA1 hin zum Leitungssystem LT1 der Vorrichtung V auf. Auf der Anschlussseite SA1 des Sensors S wird also der Druck innerhalb des Leitungssystems LT1 gemessen, welcher dem Druck innerhalb der Aspirationsnadel AN entspricht. Auf einer weiteren Seite SA2 des Sensors S wird der Umgebungsdruck gemessen. Hieraus wird durch den Sensor S vorzugsweise ein Messwert bzw. Differenzdruck ermittelt, welcher dem Unterdruck innerhalb der Aspirationsnadel AN gegenüber dem Umgebungsdruck entspricht. Als Sensorsignal wird das Signal SG von dem Sensor S an eine Auswerte- und Steuereinheit C übermittelt. Die Auswerte- und Steuereinheit C nimmt das Sensorsignal SG über eine Schnittstelle IC2 entgegen, welche vorzugsweise einen AD-Wandler aufweist.

Die Pumpe P ist ferner vorzugsweise über ein weiteres Leitungssystem LT2 mit einem Behälter B2 verbunden, welcher eine sogenannte Systemflüssigkeit SF bevorratet. Diese Systemflüssigkeit SF ist innerhalb der Vorrichtung V vorgesehen, so dass bei Beginn der Aspiration eines Teilvolumens der Probenflüssigkeit PF diese dann direkt an eine Grenzschicht der Systemflüssigkeit SF anschließt, damit es nicht zu einem Strömungsabriss innerhalb der Aspirationsnadel AN kommt.

Die Auswerte- und Ansteuereinheit C kann über eine Schnittstelle IC1 ein Steuersignal ST an die Druckerzeugungseinheit in Form der Pumpe P bereitstellen. Die Auswerte- und Ansteuereinheit C weist ferner versuchsweise eine Speichereinheit MEM auf.

Über eine weitere Schnittstelle IC4 kann die Auswerte- und Ansteuereinheit C vorzugsweise ein Fehlersignal FS bereitstellen.

Die gesamte Vorrichtung V ist vorzugsweise so ausgebildet, dass alle ihre Teilelemente gemeinsam auf einem Gestell GS fixiert sind, um dann durch Verfahren des Gestells GS in Z-Richtung ein Eintauchen der Spitze SP der Aspirationsnadel AN in die Probenflüssigkeit PF herbeizuführen. Vorzugsweise ist alternativ nur die Nadel AN an einer Verfahrvorrichtung bzw Halterung HT positioniert, welche über eine Schnittstelle IC3 durch die Auswerte- und Ansteuereinheit C mittels eines Ansteuersignals VSI in ihrer Position verfahren werden kann, insbesondere in z-Richtung. Hierbei ist die an die Nadel AN angeschlossene Leitung LT1 insbesondere eine mechanisch flexible Leitung.

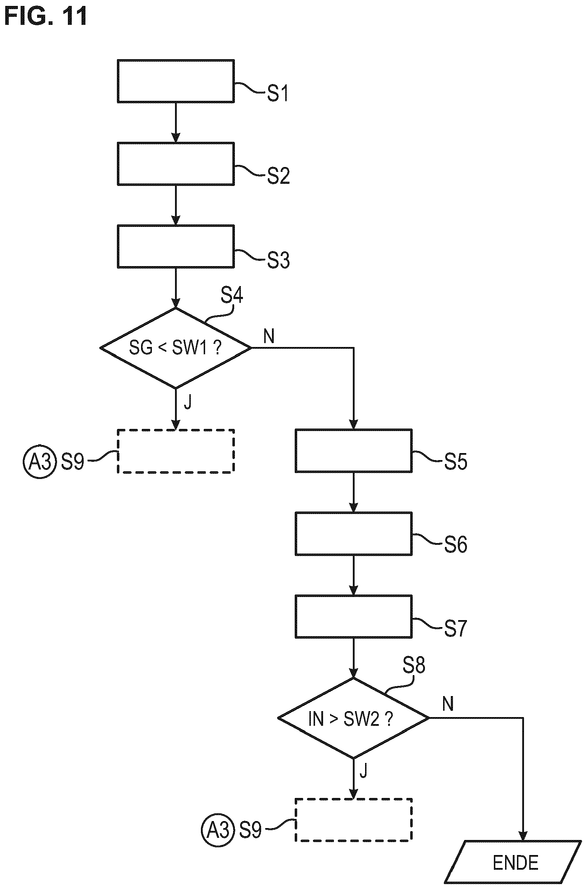

Die Figur 11 zeigt Schritte des erfindungsgemäßen Verfahrens. Die Figur 2 zeigt hierzu entsprechende Zeiträume und Signalkurvenverläufe.

In einem ersten Schritt S1 erfolgt ein Eintauchen der Spitze SP der Aspirationsnadel AN in die Flüssigkeit PF.

In einem Schritt S2 erfolgt ein Erzeugen eines Unterdrucks in der Aspirationsnadel für eine vorgegebene Zeitdauer TD, siehe Figur 2, insbesondere bis zu einem Zeitpunkt TE, um ein Aspirieren eines vorbestimmten Teilvolumens der Flüssigkeit PF in die Aspirationsnadel AN herbeizuführen.

Es erfolgt in einem Schritt S3 ein fortlaufendes Erfassen einer Sensorsignalkurve SK mittels fortlaufenden Messens des Sensorsignals SG aus der Figur 10, welches einen Druck in der Aspirationsnadel indiziert, während einer gesamten Zeitdauer TG. Die gesamte Zeitdauer TG umfasst die vorbestimmte Zeitdauer TD sowie eine auf die vorbestimmte Zeitdauer TD folgende weitere Zeitdauer TW. Die weitere Zeitdauer TW reicht vom Zeitpunkt T1 bis zum Zeitpunkt T2. Die weitere Zeitdauer TW muss nicht unmittelbar auf die vorbestimmte Zeitdauer TD folgen. Dies ist in der Figur 2 dadurch dargestellt, dass der Zeitpunkt T1 nicht mit dem Zeitpunkt TE übereinstimmt.

In einem Schritt S4 wird in dem Fall ein Fehlerzustand detektiert, dass das Sensorsignal beziehungsweise die Sensorsignalkurve SK während der vorgegebenen Zeitdauer TD einen ersten Schwellenwert SW1 unterschreitet. In der Figur 2 ist dieser Fall nicht gegeben, da der Schwellenwert SW1 nicht durch das Sensorsignal beziehungsweise die Sensorsignalkurve SK unterschritten wird. Würde die Sensorsignalkurve aus der Figur 2 einen Verlauf aufweisen wie die Sensorsignalkurve SK aus der Figur 1, so würde dann auch in dem hier vorgeschlagenen erfindungsgemäßen Verfahren ein Fehlerzustand detektiert werden, wie zuvor anhand der Figur 1 gemäß des Standes der Technik beschrieben.

Das erfindungsgemäße Verfahren ist durch weitere Schritte gekennzeichnet und damit vorteilhaft gegenüber dem Stand der Technik.

In einem Schritt S5 wird eine Referenzsignalkurve RK, insbesondere eine vorbestimmte Referenzsignalkurve RK, vorgegeben, beispielsweise mittels eines Datensatzes aus einer Speichereinheit MEM, siehe Figur 10.

Es erfolgt dann in einem Schritt S6 ein Bestimmen eines Abweichungsmaßes IN, siehe Figur 2, welches ein Abweichen der Sensorsignalkurve SK von der Referenzsignalkurve RK während der weiteren Zeitdauer TW indiziert.

Beispielsweise kann das Abweichungsmaß IN als Integral der Differenz zwischen Referenzsignalkurve RK und Sensorsignalkurve SK ermittelt werden, wobei das Integral insbesondere als untere und obere Grenze den Startzeitpunkt T1 beziehungsweise den Endzeitpunkt T2 der weiteren Zeitdauer TW aufweist.

In einem Schritt S7 wird ein zweiter, insbesondere vorbestimmter Schwellenwert SW2 bereitgestellt, beispielsweise wieder mittels eines Datensatzes aus der Speichereinheit MEM, siehe Figur 10.

Ferner wird erfindungsgemäß dann ein Fehlerzustand in Abhängigkeit des Abweichungsma-ßes und des zweiten Schwellenwertes SW2 detektiert. Es erfolgt ein Detektieren des Fehlerzustandes in dem Fall, dass das Sensorsignal einen ersten Schwellenwert SW1 während der vorbestimmten Zeitdauer TD unterschreitet oder Detektieren des Fehlerzustandes nach Ablauf der weiteren Zeitdauer TW in dem Fall, dass das Abweichungsmaß IN hinreichend von dem zweiten Schwellwert SW2 abweicht. Es erfolgt dieses Detektieren des Fehlerzustandes nach Ablauf der weiteren vorbestimmten Zeitdauer TW.

Es wird vorzugsweise in dem Fall der Fehlerzustand detektiert, dass das Abweichungsmaß IN den zweiten Schwellenwert SW2 überschreitet.

Das erfindungsgemäße Verfahren ist aus unterschiedlichen Gründen vorteilhaft, welche nun im Weiteren näher erläutert werden.

Aus dem Stand der Technik ist es bekannt, lediglich für den Zeitraum der vorbestimmten Zeitdauer TDX - Figur 1 - beziehungsweise TD - Figur 2 - das Sensorsignal zu überwachen, während ein Unterdruck durch eine Druckerzeugungseinheit in der Aspirationsnadel erzeugt wird. Gemäß des Standes der Technik wird nur dann auf einen Fehlerzustand aufgrund eines Teilverschlusses oder Komplettverschlusses der Aspirationsnadel geschlossen, falls das Sensorsignal beziehungsweise die Sensorsignalkurve SK den unteren Schwellenwert SW - Figur 1 - beziehungsweise SW1 - Figur 2 - unterschreitet. Ein solches Unterschreiten eines ersten Schwellenwertes SW, SW1 erfolgt häufig tatsächlich dann, wenn bei Aspiration größerer Volumina und eines tatsächlichen Komplettverschlusses der Aspirationsnadel AN ein Fehlerzustand vorliegt. Die Erfinder haben jedoch herausgefunden, dass es weitere Fehlerzustände gibt, welche zu einer Aspiration eines Flüssigkeitsvolumens von nicht erwünschter Menge führen aber nicht durch eine einfach Schwellenwertunterschreitung während der vorbestimmten Zeitdauer TD, TDX detektiert werden können. Dies liegt beispielsweise in dem Fall vor, dass ein Teilverschluss der Aspirationsnadel AN vorliegt oder aber beispielsweise in dem weiteren Fall, dass bei Komplettverschluss der Nadel lediglich eine besonders geringe Menge eines Volumens aspiriert werden soll.

**EP 4 104 931 B1**

Die Figur 2 zeigt einen Sensorsignalkurvenverlauf für den Fall, dass ein Teilverschluss nicht tatsächlich zu einem extrem starken Absenken der Sensorsignalkurve SK während des Zeitraumes TD des Erzeugens des Unterdrucks führt, so dass der Schwellenwert SW1 nicht unterschritten wird. Jedoch führt ein Teilverschluss der Aspirationsnadel dazu, dass die Sensorsignalkurve SK insbesondere in dem weiteren Zeitraum TW sich nicht schnell genug wieder an den Umgebungsdruck UD annähert. Der Druckwert zeigt ein typisches dynamisches Schwingverhalten ab dem Zeitpunkt TE, ab welchem die Druckerzeugungseinheit ausgeschaltet wird und das Erzeugen des Unterdrucks beendet wird. Es folgt dann ein typischer erster Überschwinger US als auch ein Unterschwinger UT des Drucks bzw. des Sensorsignals, nach welchem die Sensorsignalkurve SK sich dann nur langsam wieder sich dem Umgebungsdruck UD annähert. In dem Fall, dass keine Verstopfung beziehungsweise kein Fehlerzustand vorliegt, müsste der Druckwert der Sensorsignalkurve sich ab dem Zeitpunkt T1 bis hin zu dem Zeitpunkt T2 schneller wieder dem Sensorwert entsprechend des Umgebungsdrucks hinreichend annähern und einen Verlauf ähnlich der Referenzkurve RK aufweisen. Die Erfinder haben erkannt, dass ein - wie in der Figur 2 dargestelltes - nur langsames Annähern der Sensorsignalkurve SK hin zum zu erwartenden Wert des Umgebungsdrucks UD darauf schließen lässt, dass nur ein Teilverschluss der Aspirationsnadel AN vorliegt. Die Zeitdauer TW beträgt beispielsweise 10 ms.

Das erfindungsgemäße Verfahren ist ferner auch in dem Fall vorteilhaft, dass nur ein besonders geringes Volumen in die Aspirationsnadel AN hineinaspiriert werden soll. Für solche kleinen Flüssigkeitsvolumina wird nämlich üblicherweise die Druckerzeugungseinheit P nur kurzzeitig angesteuert und dann so schnell wieder ausgeschaltet, dass es selbst bei einem Totalverschluss während des Ansteuerzeitraumes TD bis hin zu dem Endzeitpunkt des Ansteuerns TE nicht zu einem Unterschreiten des Schwellenwertes SW1 durch das Sensorsignal kommt. Nur durch Betrachtung eines Abweichens der Sensorsignalkurve SK von einer Referenzsignalkurve RK in dem späteren Zeitraum TW nach dem Abschalten der Druckerzeugungseinheit - Zeitpunkt TE - kann ein Totalverschluss auch bei Aspiration kleiner Volumina detektiert werden. Dann nämlich nähert sich die Sensorsignalkurve SK nur langsam wieder dem Sensorwert entsprechend des Wertes des Umgebungsdrucks UD an. Auch für diesen Fall der Aspiration kleiner Volumina bei Totalverschluss stellt also das erfindungsgemäße Verfahren eine Detektion eines Fehlerzustandes sicher, welches durch den Stand der Technik nicht geleistet werden würde.

Man kann also feststellen, dass das Detektieren des Fehlerzustandes erfindungsgemäß in dem Fall erfolgt, dass das Sensorsignal beziehungsweise die Sensorsignalkurve den ersten Schwellenwert SW1 während der vorgegebenen Zeitdauer TD unterschreitet oder aber auch dass das Abweichungsmaß, welches nach Ende der vorgegebenen Zeitdauer TD des Ansteuerns der Druckerzeugungseinheit ermittelt wird, von einem zweiten Schwellenwert SW2 hinreichend abweicht beziehungsweise insbesondere diesen überschreitet. Dieses wird in einem Schritt S8 überprüft.

Es erfolgt hierbei das Detektieren des Fehlerzustandes in Abhängigkeit des Abweichungsma-ßes IN und des zweiten Schwellenwertes E2 nach Ablauf der vorbestimmten Zeitdauer TD.

Vorzugsweise wird in einem Schritt S9 bei Detektieren des Fehlerzustandes ein Fehlersignal FS ausgegeben.

Dieser Schritt S9 ist auch in der Figur 11 dargestellt.

Das Abweichungsmaß kann, wie zuvor beschrieben, das Integral der Differenz zwischen der Referenzsignalkurve und der Sensorsignalkurve sein. Hierbei ist bei Zeitindex t das Abweichungsmaß IN dann vorzugsweise

$$IN = \int_{T1}^{T2} [RK(t) - SK(t)]$$

Vorzugsweise ist das Abweichungsmaß IN

$$IN = \int_{T1}^{T2} \max[RK(t) - SK(t), 0]$$

Vorzugsweise wird im Fall einer zeitdiskreten Messung mit Zeitindex k das Abweichungsmaß IN bestimmt zu

$$IN = \sum_{k=T1}^{k=T2} \max[RK(k) - SK(k), 0]$$

Eine Detektion des Fehlerzustandes erfolgt in Abhängigkeit des Abweichungsmaßes IN und des Schwellenwertes, also als eine Funktion

6

$$f(IN, SW2)$$

Eine Detektion des Fehlerzustandes erfolgt dann insbesondere in dem Fall, dass das Abweichungsmaß IN dem zweiten Schwellenwert SW2 überschreitet

$$IN > SW2$$

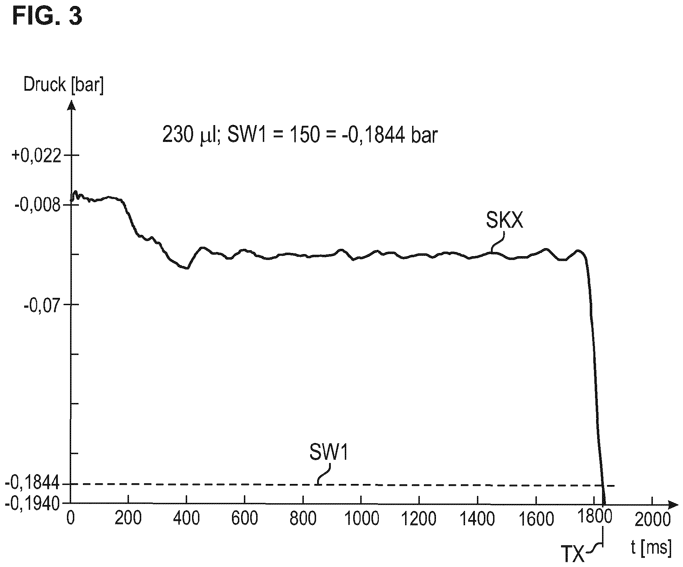

Die Figur 3 zeigt aus einem Aspirationsvorgang für eine Aspiration von 230 $\mu$l eine beispielhafte Sensorsignalkurve SKX, wobei der Zeitpunkt des Endes der vorbestimmten Zeitdauer noch nicht erreicht wurde. Als Schwellenwert SW1 wurde ein Unterdruck von -0,1844 bar verwendet. Zum Zeitpunkt TX unterschreitet die Sensorsignalkurve SKX eindeutig den Schwellenwert SW1.

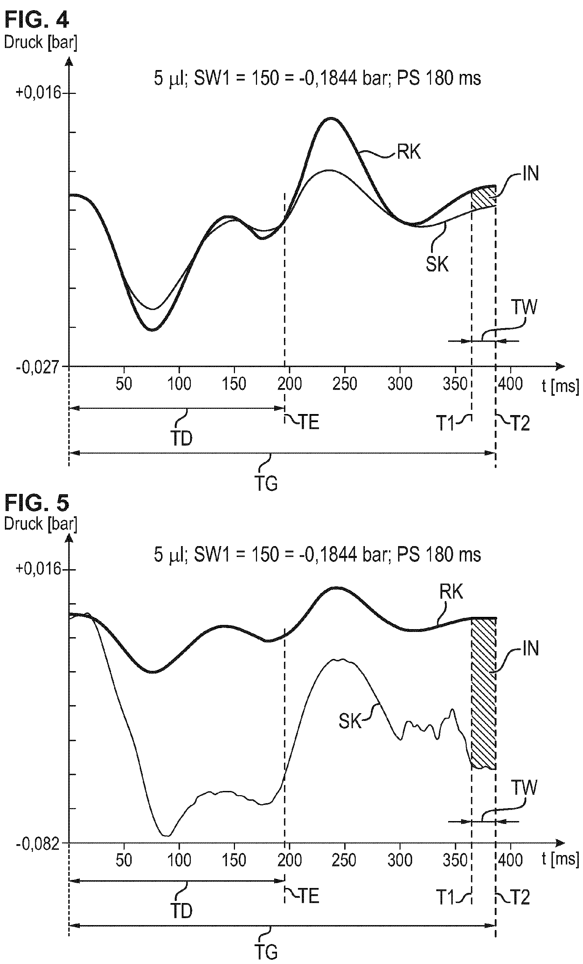

Die Figur 4 und die Figur 5 zeigen Signalverläufe für eine Aspiration eines besonders kleinen Volumens von 5 $\mu$l wobei auch hier ein Schwellenwert von -0,1844 bar angewendet wurde, welcher aber aufgrund der Skalierung der y-Achse nicht sichtbar ist. In y-Richtung ist jeweils ansteigend ein Betrag des Drucks aufgetragen.

Die Figur 4 zeigt den Verlauf der Sensorsignalkurve SK in dem Fall, dass kein Fehlerzustand vorliegt und keine Verstopfung in irgendeiner Form der Aspirationsnadel AN gegeben ist. Zum Zeitpunkt TE endet die vorgegebene Zeitdauer TD und es ist zu beobachten, dass die Sensorsignalkurve SK während der Zeitdauer TW hinreichend ähnlich zur Referenzkurve RK verläuft. Würde als Abweichungsmaß IN das Integral der Differenz der Kurven RK und SK verwendet werden, so würde dies der Fläche zwischen den Kurven RK und SK entsprechen.

Die Figur 5 zeigt die Referenzkurve aus der Figur 4 in einer anderen Skalierung der y-Achse zusammen mit einem anderen Sensorsignal SK in dem Fall, dass eine Anomalie beziehungsweise eine Verstopfung der Aspirationsnadel vorliegt. Auch hier wird zu dem Zeitpunkt TE die vorbestimmte Zeitdauer TD beendet und dann für die weitere Zeitdauer TW die Abweichung der Sensorsignalkurve SK von der Referenzsignalkurve RK ermittelt, insbesondere als Integral IN. Es wird hier besonders deutlich, dass die Sensorsignalkurve SK trotz Vorliegen einer zumindest teilweisen Verstopfung der Aspirationsnadel nicht den unteren Schwellenwert SW1 von -0,1844 bar unterschreitet. Durch Betrachten des Abweichungsmaßes IN einer Abweichung der Sensorsignalkurve SK von der Referenzsignalkurve RK kann jedoch hier nun aufgrund des erfindungsgemäßen Verfahrens der Fehlerzustand sicher detektiert werden.

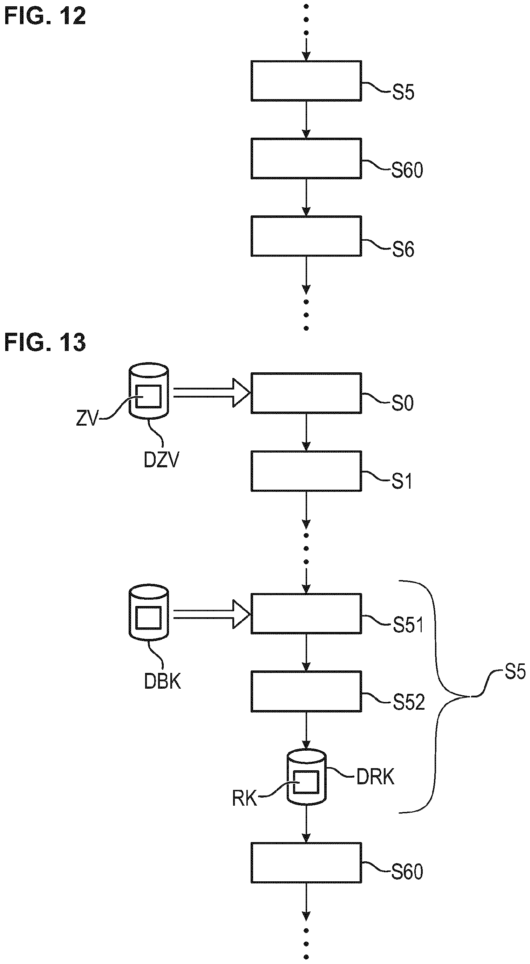

Die Figur 12 zeigt eine weitere bevorzugte Ausführungsform des Verfahrens mit weiteren vorzugsweise durchzuführenden Schritten. Vorzugsweise folgt auf den zuvor beschriebenen Schritt S5 ein Schritt S60, in welchem insbesondere nach Erfassen der Sensorsignalkurve ein zeitliches Ausrichten der Sensorsignalkurve zu der Referenzsignalkurve erfolgt. Dieses wird vorzugsweise mittels Korrelation der Referenzsignalkurve und der Sensorsignalkurve zueinander herbeigeführt und dann der Zeitwert der Korrelationsfunktion gewählt, bei welchem die Korrelationsfunktion ihr Maximum annimmt. Die Sensorsignalkurve wird dann um diesen Zeitwert zeitlich gegenüber der Referenzsignalkurve versetzt. Dieses Ausrichten erfolgt insbesondere vor Bestimmung des Abweichungsmaßes.

Auf den Schritt S60 folgt dann der zuvor beschriebene Schritt S6.

Die Korrelation des Referenzsignals beziehungsweise der Referenzsignalkurve zu der Sensorsignalkurve erfolgt insbesondere mittels

$$r(\tau) = \int_0^{T2} RK(t) \cdot SK(t - \tau) d\tau$$

Der Zeitwert $\tau_{max}$ ist dann der Zeitwert, um den die Sensorsignalkurve zeitlich versetzt wird mit

$$\tau_{max} = argmax \left[ r(\tau) = \int_0^{T2} RK(t) \cdot SK(t - \tau) d\tau \right]$$

Hierdurch wird eine Genauigkeit der Bestimmung des Abweichungsmaßes IN ermöglicht beziehungsweise erhöht.

Die Figur 13 zeigt weitere vorzugsweise durchzuführende Schritte. Vorzugsweise erfolgt in einem Schritt S0 ein Vorgeben eines zu erreichenden Zielaspirationsvolumens ZV, welches vorzugsweise als Datensatz DZV bereitgestellt wird. Ein solches Zielaspirationsvolumen als Datensatz DZV kann beispielsweise über eine in der Figur 10 dargestellte Schnittstelle IC4 der Ansteuer- und Auswerteeinheit C erfolgen, alternativ vorzugsweise über eine Netzwerkschnittstelle NIC. Über die Netzwerkschnittstelle NIC ist die Auswerte- und Ansteuereinheit C insbesondere an ein Datennetzwerk angebunden.

Auf den Schritt S0 folgt gemäß Figur 13 der zuvor beschriebene S1.

Der Schritt S5, welcher zuvor beschrieben wurde, wird in dieser Ausführungsform vorzugsweise durch zwei Schritte S51, S52 durchgeführt. In einem Schritt S51 erfolgt ein Bereitstellen einer Basisreferenzkurve in Form eines Datensatzes DBK.

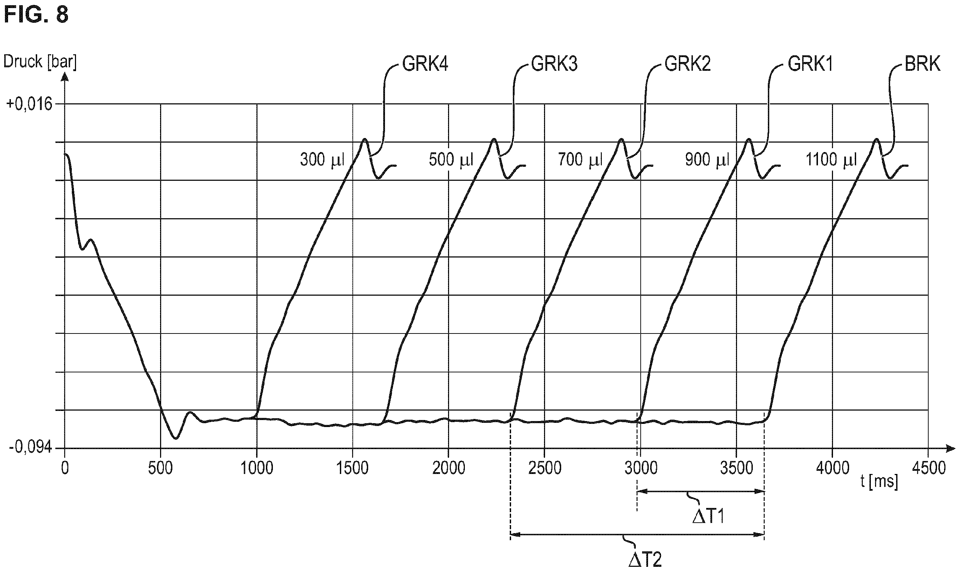

Vorzugsweise wird eine Basisreferenzkurve BRK, wie in Figur 8 dargestellt, bereitgestellt. Abhängig von einem vorgegebenen Zielaspirationsvolumen wird dann in einem Schritt S52 die Basisreferenzkurve BRK modifiziert. Wird beispielsweise ein Zielaspirationsvolumen von 900 $\mu$l vorgegeben, so wird in dem Beispiel der Figur 8 die Basisreferenzkurve BRK modifiziert durch Ausschneiden eines Abschnittes $\Delta$T1 aus der Basis-Referenzkurve BRK. Die Basisreferenzkurve BRK ist beispielsweise für einen bestimmten Wertebereich eines Ziel-Aspirationsvolumens von 300 $\mu$l bis 1100 $\mu$l gültig.

Eine entsprechende generierte Referenzkurve GRK1, ..., GRK4 kann dann beispielsweise insbesondere dadurch gewonnen werden, dass die Basisreferenzkurve BRK um einen vorgegebenen zeitlichen Abschnitt $\Delta$T1, siehe Figur 8, in Abhängigkeit des Ziel-Aspirationsvolumens gekürzt wird, so dass die generierte Referenzkurve GRK1 als die zu verwendende Referenzkurve RK verwendet werden kann. Das Generieren kann insbesondere dadurch erfolgen, dass die Basisreferenzkurve - welche eine Initialphase, eine zeitliche Mittelphase und eine Endphase aufweist - in der Mittelphase um einen Zeitabschnitt $\Delta$T1 gekürzt wird.

Für ein Zielaspirationsvolumen von 700 $\mu$l würde beispielsweise die Basis-Referenzkurve BRK um einen Zeitabschnitt $\Delta$T2 gekürzt werden.

Es kann dann beispielsweise eine solche generierte Referenzkurve bzw. Referenzsignalkurve GRK1 in dem Schritt S52 als Referenzkurve RK mittels eines Datensatzes DRK bereitgestellt werden. Die Referenzkurve RK kann dann in dem Schritt S6 verwendet werden, wie zuvor beschrieben.

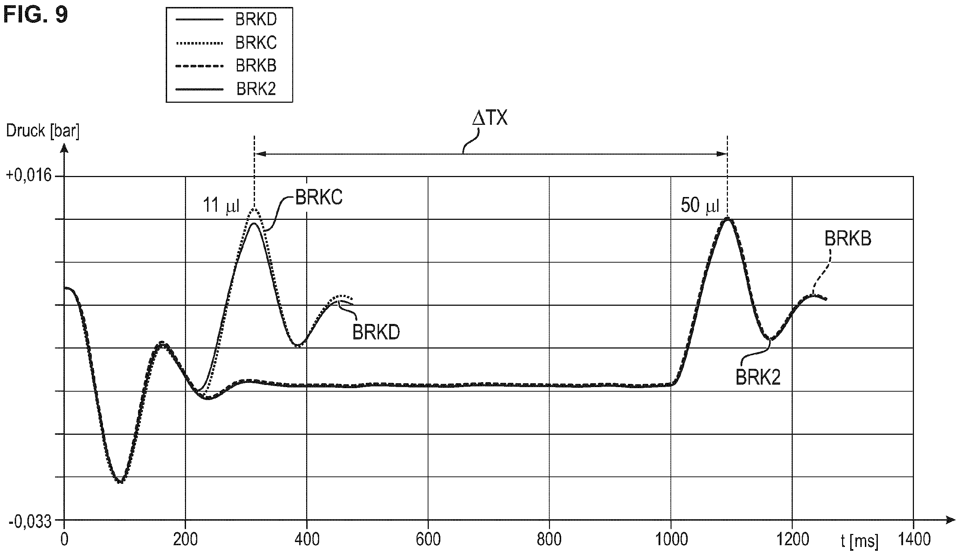

Die Figur 9 zeigt eine weitere Basis-Referenzkurve BRK2 beispielsweise für einen Volumenbereich von 11 $\mu$l bis 50 $\mu$l.

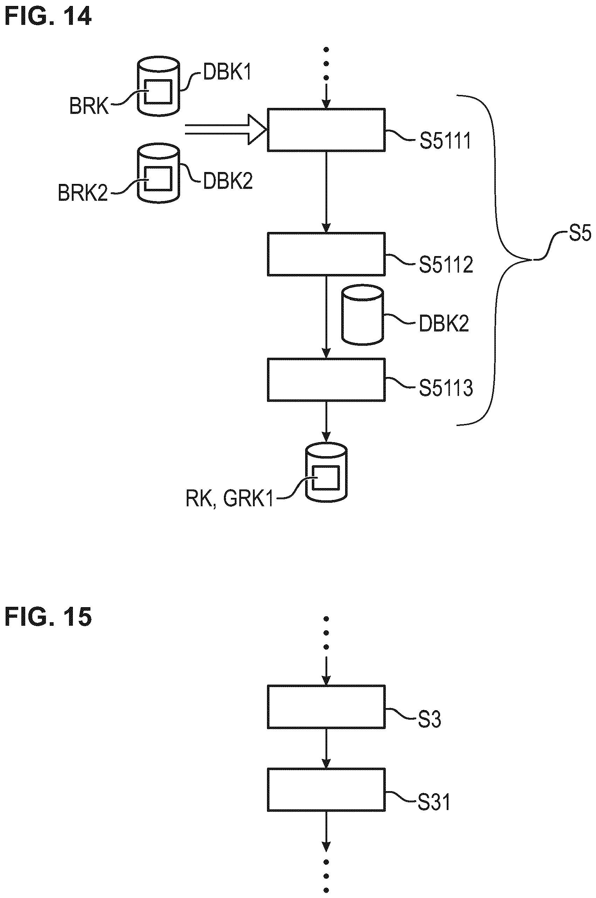

Vorzugsweise werden, wie in Figur 14 dargestellt, in einem Schritt S5111 mehrere, jeweilige Basis-Referenzkurven BRK, BRK2 für jeweilige Wertebereiche von Ziel-Aspirationsvolumina bereitgestellt, insbesondere als jeweilige Datensätze DBK1, DBK2. Die Kurve BRK steht beispielsweise für einen Wertebereich des Ziel-Aspirationsvolumens von 300 $\mu$l bis 1100 $\mu$l die Kurve BRK2 steht beispielsweise für einen Wertebereich des Ziel-Aspirationsvolumens von 10 $\mu$l bis 50 $\mu$l.

In einem Schritt S5112 erfolgt dann ein Auswählen einer dieser Basisreferenzkurven, beispielsweise der Basisreferenzkurve BRK2 bzw. des Datensatz DBK2, in Abhängigkeit des Ziel-Aspirationsvolumens ZV, welches beispielsweise 11 $\mu$l beträgt. In einem Schritt S5113 erfolgt dann ein Generieren der finalen Referenzsignalkurve RK als die generierte Kurve BRKD, welche durch einen Datensatz DRK indiziert wird, mittels Modifizieren der ausgewählten Basisreferenzkurve BRK2 in Abhängigkeit des Ziel-Aspirationsvolumens. Dieses Modifizieren kann vorzugsweise erfolgen wie zuvor unter Bezug auf die Figuren 8 erläutert. Vorzugsweise erfolgt hierbei neben einem Ausschneiden eines Zeitabschnittes aus der Basis-Referenzkurve BRK2 auch eine insbesondere lineare Amplitudenskalierung der Kurve BRK2 zur Generierung der generierten Kurve BRKD.

Durch das Bereitstellen mehrerer Basisreferenzkurven, welche jeweilige Wertebereiche von Ziel-Aspirationsvolumina repräsentieren, das anschließende Auswählen einer der Basisreferenzkurven in Abhängigkeit des Ziel-Aspirationsvolumen und das Modifizieren der ausgewählten Basisreferenzkurve in Abhängigkeit des Ziel-Aspirationsvolumen ist es möglich, durch Bereitstellen bzw. Abspeichern nur weniger Basisreferenzkurven eine Vielzahl von Wertebereichen von Ziel-Aspirationsvolumina abzudecken.

Die Praktikabilität des Prinzips, eine Basisreferenzkurven in Abhängigkeit des Ziel-Aspirationsvolumen zu Modifizieren, wird durch die verschiedenen Kurven aus Figur 9 unterstrichen.

Für den Zielvolumenwert von 50 $\mu$l wurde beispielsweise eine Referenzkurve BRKB als gestrichelte Linie experimentell ermittelt und eine hieran approximierte Basis-Referenzkurve BRK2 konstruiert.

Für ein Zielaspirationsvolumen von 11 $\mu$l wurde eine Referenzkurve BRKC experimentell ermittelt. Wird nun jedoch für ein solches Zielaspirationsvolumen von 11 $\mu$l die Basisreferenzkurve BRK2 für 50 $\mu$l ausgewählt und dann in zeitlicher Richtung um einen Zeitabschnitt $\Delta$TX gekürzt sowie auch in ihrer Amplitude in Y-Richtung leicht angepasst, so erhält man die finale Referenzkurve BRKD, welche nur unwesentlich von einer experimentell ermittelten Referenzkurve BRKC abweicht. Dieses unterstreicht, dass das zuvor beschriebene Verfahren des Auswählens einer Basisreferenzkurve und deren Modifikation tatsächlich zu validen Referenzkurven für vorgegebene Volumina führt.

Die Figur 15 zeigt einen Schritt S31, welcher vorzugsweise dem Schritt S3 folgt. In einem Schritt S31 erfolgt ein Filtern des Sensorsignals mittels insbesondere eines Mittelwertfilters.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente wie insbesondere die Ansteuer- und Auswerteeinheit kann durch eine Hardwarekomponente oder einen Verbund von Hardwarekomponenten realisiert sein. Hardwarekomponente wie insbesondere die Ansteuer- und Auswerteeinheit kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikro-prozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

## Patentansprüche

1. Verfahren zur Detektion eines Fehlerzustandes beim Aspirieren einer Flüssigkeit, aufweisend

   - Eintauchen einer Spitze einer Aspirationsnadel in die Flüssigkeit
   - Erzeugen eines Unterdrucks in der Aspirationsnadel für eine vorgegebene Zeitdauer (TD) zum Aspirieren eines vorbestimmten Teilvolumens der Flüssigkeit in die Aspirationsnadel
   - fortlaufendes Erfassen einer Sensorsignalkurve (SK) mittels fortlaufenden Messens eines Sensorsignals, welches einen Druck in der Aspirationsnadel indiziert, während einer gesamten Zeitdauer (TG), welche die vorbestimmte Zeitdauer (TD) sowie ferner eine auf die vorbestimmte Zeitdauer (TD) folgende weitere Zeitdauer (TW) umfasst,
   - Vorgeben einer Referenzsignalkurve (RK), **gekennzeichnet durch**
   - Bestimmen eines Abweichungsmaßes (IN), welches ein Abweichen der Sensorsignalkurve (SK) von der Referenzsignalkurve (RK) für die weitere Zeitdauer (TW) indiziert,
   - Vorgeben eines vorbestimmten zweiten Schwellenwertes (SW2),
   - Detektieren des Fehlerzustandes in dem Fall, dass das Sensorsignal einen ersten Schwellenwert (SW1) während der vorbestimmten Zeitdauer (TD) unterschreitet, oder Detektieren des Fehlerzustandes nach Ablauf der weiteren Zeitdauer (TW) in dem Fall, dass das Abweichungsmaß (IN) hinreichend von dem zweiten Schwellwert (SW2) abweicht.

2. Verfahren nach Anspruch 1,
   wobei das Detektieren des Fehlerzustandes in Abhängigkeit des Abweichungsmaßes (IN) und des zweiten Schwellwertes (SW2) nach Ablauf der vorbestimmten Zeitdauer (TD) erfolgt.

**3.** Verfahren nach Anspruch 1,
ferner aufweisend

- Ausgeben eines Fehlersignals (FS) in dem Fall, dass der Fehlerzustand detektiert wurde.

**4.** Verfahren nach Anspruch 1,
ferner aufweisend

- zeitliches Ausrichten der Sensorsignalkurve (SK) und der Referenzsignalkurve (RK) zueinander.

**5.** Verfahren nach Anspruch 1,
ferner aufweisend

- Vorgeben eines Ziel-Aspirationsvolumens (ZV),
- Bereitstellen einer Basis-Referenzkurve (BRK),
- Generieren der Referenzsignalkurve (GRK1, RK) mittels Modifizieren der Basis-Referenzkurve (BRK), insbesondere in Abhängigkeit des Ziel-Aspirationsvolumens.

**6.** Verfahren nach Anspruch 1,
ferner aufweisend

- Vorgeben eines Ziel-Aspirationsvolumens (ZV),
- Bereitstellen mehrerer Basis-Referenzkurven (DBK),
- Auswählen einer der Basis-Referenzkurven (DBKX) in Abhängigkeit des Ziel-Aspirationsvolumens,
- Generieren der Referenzsignalkurve (RK, DRK) mittels Modifizieren der ausgewählten Basis-Referenzkurve (DBKX, BRK2), insbesondere in Abhängigkeit des Ziel-Aspirationsvolumens.

**7.** Verfahren nach Anspruch 1,
ferner aufweisend

- Filtern des Sensorsignals (SG) mittels insbesondere eines Mittelwertfilters.

**8.** Vorrichtung zur Detektion eines Fehlerzustandes beim Aspirieren einer Flüssigkeit, aufweisend

- eine Aspirationsnadel (AW) mit einer Spitze (SP),
- einer ansteuerbaren Verfahrvorrichtung (HT, G) zum Verfahren der Aspirationsnadel (AW),
- eine Druckerzeugungseinheit (P) zum Erzeugen eines Unterdrucks in der Aspirationsnadel (AW),
- eine Drucksensoreinheit (S) zum Messen eines Sensorsignals (SG), welches einen Druck in der Aspirationsnadel (AN) indiziert,
- eine Ansteuer- und Auswerteeinheit (C) mit einer ersten Schnittstelle (K1) zu der Druckerzeugungseinheit (P), ferner einer zweiten Schnittstelle (K2) zu der Drucksensoreinheit (S) und einer dritten Schnittstelle (K3) zu der Verfahrvorrichtung (HT, G),

wobei die Ansteuer- und Auswerteeinheit (C) ferner ausgebildet ist,

○ die Verfahrvorrichtung (HT, G) derart anzusteuern, dass die Spitze (SP) der Aspirationsnadel (AW) in die Flüssigkeit (PF) eintaucht,
○ fortlaufend eine Sensorsignalkurve (SK) zu erfassen mittels fortlaufenden Messens des Sensorsignals (SG) während einer gesamten Zeitdauer (TG), welche die vorbestimmte Zeitdauer (TD) sowie ferner eine auf die vorbestimmte Zeitdauer (TD) folgende weitere Zeitdauer (TW) umfasst,
○ eine vorbestimmte Referenzsignalkurve (RK) vorzugeben,

wobei die Ansteuer- und Auswerteeinheit (C) **dadurch gekennzeichnet ist, dass** sie ferner ausgebildet ist,

○ ein Abweichungsmaß (IN) zu bestimmen, welches ein Abweichen der Sensorsignalkurve (SK) von der Referenzsignalkurve (RK) für die weitere Zeitdauer indiziert,
○ einen vorbestimmten zweiten Schwellenwert (SW2) vorzugeben,
○ sowie den Fehlerzustand in dem Fall zu detektieren, dass das Sensorsignal einen ersten Schwellenwert (SW1) während der vorgegebenen Zeitdauer (TD) unterschreitet,

∘ oder den Fehlerzustand nach Ablauf der weiteren Zeitdauer (TW) in dem Fall zu detektieren, dass das Abweichungsmaß (IN) hinreichend von dem zweiten Schwellwert (SW2) abweicht.

**Claims**

1. A method for detecting an error state when aspirating a liquid, including

   - immersing a tip of an aspiration needle in the liquid
   - generating a negative pressure in the aspiration needle for a predefined time period (TD) to aspirate a predetermined partial volume of the liquid into the aspiration needle
   - continuously acquiring a sensor signal curve (SK) via continuous measurement of a sensor signal, which indicates a pressure in the aspiration needle, during an overall time period (TG), which comprises the predetermined time period (TD) and furthermore a further time period (TW) following the predetermined time period (TD),
   - providing a reference signal curve (RK),
   **characterized by**
   - determining a deviation measure (IN), which indicates a deviation of the sensor signal curve (SK) from the reference signal curve (RK) during the further time period (TW),
   - providing a predetermined second threshold value (SW2),
   - detecting the error state in the case that the sensor signal falls below a first threshold value (SW1) during the predetermined time period (TD), or detecting the error state after expiration of the further time period (TW) in the case that the deviation measure (IN) deviates sufficiently from the second threshold value (SW2).

2. The method as claimed in claim 1,
   wherein the detection of the error state takes place as a function of the deviation measure (IN) and the second threshold value (SW2) after expiration of the predetermined time period (TD).

3. The method as claimed in claim 1,
   furthermore including

   - outputting an error signal (FS) in the case that the error state was detected.

4. The method as claimed in claim 1,
   furthermore including

   - aligning the sensor signal curve (SK) and the reference signal curve (RK) in time in relation to one another.

5. The method as claimed in claim 1,
   furthermore including

   - specifying a target aspiration volume (ZV),
   - providing a base reference curve (BRK),
   - generating the reference signal curve (GRK1, RK) via modification of the base reference curve (BRK), in particular as a function of the target aspiration volume.

6. The method as claimed in claim 1,
   furthermore including

   - specifying a target aspiration volume (ZV),
   - providing multiple base reference curves (DBK),
   - selecting one of the base reference curves (DBKX) as a function of the target aspiration volume,
   - generating the reference signal curve (RK, DRK) via modification of the selected base reference curve (DBKX, BRK2), in particular as a function of the target aspiration volume.

7. The method as claimed in claim 1,
   furthermore including

- filtering the sensor signal (SG) via a mean value filter in particular.

8. A device for detecting an error state when aspirating a liquid, including

- an aspiration needle (AW) having a tip (SP),
- an activatable movement device (HT, G) for moving the aspiration needle (AW),
- a pressure generating unit (P) for generating a negative pressure in the aspiration needle (AW),
- a pressure sensor unit (S) for measuring a sensor signal (SG), which indicates a pressure in the aspiration needle (AN),
- an activation and evaluation unit (C) having a first interface (K1) to the pressure generating unit (P), furthermore a second interface (K2) to the pressure sensor unit (S), and a third interface (K3) to the movement device (HT, G),

wherein the activation and evaluation unit (C) is furthermore designed

○ to activate the movement device (HT, G) in such a way that the tip (SP) of the aspiration needle (AW) is immersed in the liquid (PF),
○ to continuously acquire a sensor signal curve (SK) via continuous measurement of the sensor signal (SG) during an overall time period (TG), which comprises the predetermined time period (TD) and furthermore a further time period (TW) following the predetermined time period (TD),
○ to provide a predetermined reference signal curve (RK),

wherein the activation and evaluation unit (C) is **characterized in that** it is furthermore designed

○ to determine a deviation measure (IN), which indicates a deviation of the sensor signal curve (SK) from the reference signal curve (RK) during the further time period,
○ to provide a predetermined second threshold value (SW2),
○ and to detect the error state in the case that the sensor signal falls below a first threshold value (SW1) during the predetermined time period (TD)
○ or detecting the error state after expiration of the further time period (TW) in the case that the deviation measure (IN) deviates sufficiently from the second threshold value (SW2).

## Revendications

1. Procédé permettant de détecter un état d'erreur lors de l'aspiration d'un liquide, présentant les étapes consistant à

- plonger une pointe d'une aiguille d'aspiration dans le liquide,
- générer une dépression dans l'aiguille d'aspiration pendant une durée spécifiée (TD) pour aspirer un volume partiel prédéterminé du liquide dans l'aiguille d'aspiration,
- détecter en continu une courbe de signal de capteur (SK) au moyen d'une mesure continue d'un signal de capteur qui indique une pression dans l'aiguille d'aspiration pendant une durée totale (TG) qui comprend la durée prédéterminée (TD) ainsi qu'en outre une durée supplémentaire (TW) suivant la durée prédéterminée (TD),
- spécifier une courbe de signal de référence (RK),
**caractérisé par** les étapes consistant à
- déterminer une mesure d'écart (IN) qui indique un écart de la courbe de signal de capteur (SK) par rapport à la courbe de signal de référence (RK) pour la durée supplémentaire (TW),
- spécifier une deuxième valeur seuil prédéterminée (SW2),
- détecter l'état d'erreur au cas où le signal de capteur serait inférieur à une première valeur seuil (SW1) pendant la durée prédéterminée (TD), ou détecter l'état d'erreur après expiration de la durée supplémentaire (TW) au cas où la mesure d'écart (IN) s'écarterait suffisamment de la deuxième valeur seuil (SW2).

2. Procédé selon la revendication 1,
dans lequel la détection de l'état d'erreur est effectuée en fonction de la mesure d'écart (IN) et de la deuxième valeur seuil (SW2) après expiration de la durée prédéterminée (TD).

3. Procédé selon la revendication 1,
présentant en outre l'étape consistant à

- sortir un signal d'erreur (FS) au cas où l'état d'erreur aurait été détecté.

4. Procédé selon la revendication 1,
   présentant en outre l'étape consistant à

   - aligner dans le temps la courbe de signal de capteur (SK) et la courbe de signal de référence (RK) l'une par rapport à l'autre.

5. Procédé selon la revendication 1,
   présentant en outre les étapes consistant à

   - spécifier un volume d'aspiration cible (ZV),
   - fournir une courbe de référence de base (BRK),
   - générer la courbe de signal de référence (GRK1, RK) au moyen d'une modification de la courbe de référence de base (BRK), en particulier en fonction du volume d'aspiration cible.

6. Procédé selon la revendication 1,
   présentant en outre les étapes consistant à

   - spécifier un volume d'aspiration cible (ZV),
   - fournir plusieurs courbes de référence de base (DBK),
   - sélectionner l'une des courbes de référence de base (DBKX) en fonction du volume d'aspiration cible,
   - générer la courbe de signal de référence (RK, DRK) au moyen d'une modification de la courbe de référence de base sélectionnée (DBKX, RBK2), en particulier en fonction du volume d'aspiration cible.

7. Procédé selon la revendication 1,
   présentant en outre l'étape consistant à

   - filtrer le signal de capteur (SG) au moyen en particulier d'un filtre médian.

8. Dispositif permettant de détecter un état d'erreur lors de l'aspiration d'un liquide, présentant

   - une aiguille d'aspiration (AW) munie d'une pointe (SP),
   - un dispositif de déplacement pouvant être piloté (HT, G) pour déplacer l'aiguille d'aspiration (AW),
   - une unité de génération de pression (P) pour générer une dépression dans l'aiguille d'aspiration (AW),
   - une unité de capteur de pression (S) pour mesurer un signal de capteur (SG) qui indique une pression de l'aiguille d'aspiration (AN),
   - une unité de pilotage et d'analyse (C) munie d'une première interface (K1) avec l'unité de génération de pression (P), en outre d'une deuxième interface (K2) avec l'unité de capteur de pression (S) et d'une troisième interface (K3) avec le dispositif de déplacement (HT, G),

   l'unité de pilotage et d'analyse (C) étant en outre réalisée pour

   o piloter le dispositif de déplacement (HT, G) de telle sorte que la pointe (SP) de l'aiguille d'aspiration (AW) plonge dans le liquide (PF),
   o détecter en continu une courbe de signal de capteur (SK) au moyen d'une mesure continue du signal de capteur (SG) pendant une durée globale (TG) qui comprend la durée prédéterminée (TD) ainsi qu'en outre une durée supplémentaire (TW) suivant la durée prédéterminée (TD),
   o spécifier une courbe de signal de référence (RK) prédéterminée,
   l'unité de pilotage et d'analyse (C) étant **caractérisée en ce qu'**elle est en outre réalisée pour
   o déterminer une mesure d'écart (IN) qui indique un écart de la courbe de signal de capteur (SK) par rapport à la courbe de signal de référence (RK) pour la durée supplémentaire,
   o spécifier une deuxième valeur seuil prédéterminée (SW2),
   o et détecter l'état d'erreur au cas où le signal de capteur serait inférieur à une première valeur seuil (SW1) pendant la durée prédéterminée (TD),
   o ou détecter l'état d'erreur après expiration de la durée supplémentaire (TW) au cas où la mesure d'écart (IN) s'écarterait suffisamment de la deuxième valeur seuil (SW2).

## FIG. 1

## FIG. 2

## FIG. 3

**FIG. 4**

Druck [bar]

5 µl; SW1 = 150 = -0,1844 bar; PS 180 ms

**FIG. 5**

Druck [bar]

5 µl; SW1 = 150 = -0,1844 bar; PS 180 ms

## FIG. 6

Druck [bar]

20 µl; SW1 = 150 = -0,1844 bar; PS nicht erreicht

+0,022—

SK

SW1

-0,184—
-0,194—

0    100    200    300    400    t [ms]

## FIG. 7

Druck [bar]

20 µl; SW1 = 150 = -0,1844 bar; PS 500ms, 640 - 650

+0,022—

RK

IN

SK

-0,095—

0    100    200    300    400    500    600    700    t [ms]

T1    T2

TW

FIG. 8

FIG. 9

EP 4 104 931 B1

**FIG. 10**

## FIG. 11

```
┌──────────┐
│          │─── S1
└────┬─────┘
     │
     ▼
┌──────────┐
│          │─── S2
└────┬─────┘
     │
     ▼
┌──────────┐
│          │─── S3
└────┬─────┘
     │        S4
     ▼
   ◇ SG < SW1 ?  ◇─── N ─────────┐
     │                           │
     │ J                         ▼
     ▼                      ┌──────────┐
(A3) S9 ┌ ─ ─ ─ ─ ┐        │          │─── S5
        ╎         ╎        └────┬─────┘
        └ ─ ─ ─ ─ ┘             │
                                ▼
                           ┌──────────┐
                           │          │─── S6
                           └────┬─────┘
                                │
                                ▼
                           ┌──────────┐
                           │          │─── S7
                           └────┬─────┘
                                │       S8
                                ▼
                            ◇ IN > SW2 ?  ◇─── N ──┐
                                │                  │
                                │ J                │
                                ▼                  ▼
              (A3) S9 ┌ ─ ─ ─ ─ ┐            ╱─────────╱
                      ╎         ╎           ╱  ENDE   ╱
                      └ ─ ─ ─ ─ ┘          ╱─────────╱
```

FIG. 12

FIG. 13

## FIG. 14

## FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014137980 A